# EUROPEAN PATENT APPLICATION

(11) **EP 3 119 072 A1**
(43) Date of publication of application: **18.01.2017**
(21) Application number: 15177336.3
(22) Date of filing: 17.07.2015
(51) Int. Cl.: H04M 15/00

(54) **BYPASS DETECTION SYSTEM AND METHOD WITH SOCIAL NETWORK ANALYSIS**

(71) Applicant: Sigos NV, 9050 Gent-Ledeberg (BE)
(72) Inventor: Van Der Meeren, Guy, 9052 Gent (BE); Verlinde, Dirk, 8200 Sint-Andries (BE); De Maesschalck, Bruno, 9200 Grembergen (BE); Banken, Hans, 90408 Nürnberg (DE)
(74) Representative: Plas, Axel Ivo Michel

(57) **Abstract**

A system (120; 420; 520; 620) for detection of a bypass (113; 413; 513; 613) of an interconnect (112; 412; 512; 612) to a telecommunication network (110; 410; 510; 610) comprises:
- an interface (125; 425; 525; 625) to a relations database (130; 430; 530; 630) wherein relationship information (132; 432; 532; 632) between entities (E1, E2, E3, E4, E5, E6) is maintained; and
- a social network analysis subsystem (123; 423; 523; 623), operationally coupled to the interface (125; 425; 525; 625) and configured to consult the relations database (130; 430; 530; 630), to analyze relationship information (132; 432; 532; 632) between entities (E1, E2, E3, E4, E5, E6) to detect one or more social network, and to identify an entity (E1) as being used to bypass the interconnect (112; 412; 512; 612) to the telecommunication network (110; 410; 510; 610) in case of:
- absence of a social network where the entity (E1) belongs to; and/or
- presence of one or more abnormal social network where the entity (E1) belongs to;
- absence of a social network between entities (E2, E3, E4, E6) related to the entity (E1); and/or
- presence of one or more abnormal social network between entities (E2, E3, E4, E6) related to the entity (E1).

## Description

### Field of the Invention

The present invention generally relates to detecting the presence of an interconnect bypass in communication networks, in particular in wireless telecommunication networks such as for example Global System for Mobile communications (GSM) networks, Universal Mobile Telecommunications System (UMTS) networks, or similar wireless telecommunication networks, but also in wired telecommunication networks or Voice over Internet Protocol (VoIP) networks. Such an interconnect bypass is also called a Subscriber Identity Module box (SIMbox), an interconnect gateway or GSM gateway, or a leaky Private Branch exchange (leaky PBX).

### Background of the Invention

When a telecommunication network operator provides access from his network to a network of another telecommunication network operator and vice versa, both operators, by means of agreement or sometimes subject to regulatory requirements, set up a suitable interconnection facility which is subjected to extensive testing in order to assess the technical reliability and the quality of service of the interconnection facility such that agreed upon or regulatory standards are met. In addition to the technical arrangements there are in many cases also interconnection charges that the telecommunication network operator receiving a call charges for the calls passing through the interconnection facility. When a calling party calls from another telecommunication network to the network of the telecommunication network operator of the receiving party, for example because the calling party is a client of a network operator different from the receiving network operator or because the calling party is travelling abroad and is making use of the network of a partnering network operator that provides roaming services to its own network operator, this call has to pass through the interconnection facility.

An interconnect bypass attempts to bypass the interconnection facilities of the network operator thereby avoiding at least part of the interconnection charges. These attempts are made by bypass operators that reroute a part of the traffic of calling parties within the network of another operator to the network of the receiving operator without going through the interconnection facility. Generally these bypass operators make use of end user facilities from the receiving operator, i.e. subscriptions represented by Subscriber Identity Module (SIM) cards, that are exploited to inject off-net calls as on-net calls in the receiving operator's network. In other cases, end user facilities of another operator, different from the receiving operator, may be used, e.g. in case such calls cost less than the normally applicable interconnection charges.

Interconnect bypass leads to a direct loss of revenue for the receiving network operator. In addition, interconnect bypass leads to technical problems. Indeed, the bypass operator uses end user facilities to provide a network interconnection. The use of these end user facilities involves the setup of a new call and the creation of an additional interface. As a consequence, there is a serious risk for quality problems such as degraded quality of audio or data transmissions, interruptions during the call, prolonged waiting time during the call initiation, unacceptable delays in the audio or data transmissions, etc. Furthermore, because a bypass operator reroutes an off-net call by setting up a new on-net call making use of end user facilities in the receiving operator's network, the Calling Line Identification (CLI) of the calling party in the off-net call will be replaced with the CLI of the misused end user facility in the signalling of the new on-net call. This leads to inconveniences for the receiving party which receives an erroneous CLI as a result of which services like caller recognition fail, and can also have more serious consequences for safety when for instance a call is made to emergency services, police services or other services that may use the CLI for identity or location tracking purposes. Furthermore, interconnect bypass also creates serious technical difficulties for automated telephone switchboards that operate on the basis of the CLI of the incoming call.

Consequently, there is a demand from network operators for adequate systems or solutions to identify end user facilities like SIM cards that are used by bypass operators in order to enable the operator to promptly stop the use of such end user facilities.

A first type of solutions to detect the presence of an interconnect bypass is implemented in a so called Fraud Management System (FMS). An FMS collects and analyzes the Call Detail Records (CDRs) received from a network operator and/or call signalling in order to detect subscriptions with suspicious behaviour that is typical for an interconnect bypass. Suspicious behaviour, i.e. call characteristics that may indicate interconnect bypass activity like for instance the absence of incoming calls, an abnormally high rate of outgoing phone calls, absence of messaging like ingoing/outgoing SMS messages, a high call diversity, i.e. a high ratio between the number of different destinations called versus the total number of destinations called, e.g. higher than 80 %, etc., is reported by the FMS to enable the operator to deactivate one or more subscriptions that are suspected of being used by a bypass operator. Such an FMS is for instance described in United States Patent Application US 2009/0069047 entitled "Methods, Systems, and Computer Program Products for Detecting Wireless Bypass in a Communications Network".

FMS requires a high number of events in order to obtain statistically relevant measures as a consequence of which its bypass detection latency is rather high.

A second type of solutions to detect the presence of an interconnect bypass relies on Test Call Generation or TCG. A test call platform comprises probes or robots in communications networks of plural operators, schedules and executes test calls between these probes, and analyzes the received CLI in the tests calls in order to detect bypass operations. Such test call platform is for instance described in the European patent application EP 2671372 A1 entitled "A System for Detection of a Bypass of an Interconnect to a Telecommunication Network". In order to detect a bypass of an interconnect to a telecommunication network under test, such TCG platform schedules and executes a test call to the telecommunication network under test from outside the telecommunication network under test, more precisely to a receiver probe with a subscription for terminating the test call. The TCG system hence comprises a control system configured to initiate such test call from a sender probe, to receive from the receiver probe call information comprising a received CLI of the test call, and to analyze the received CLI such that presence of the bypass can be detected. Such TCG system does not require an interface with the CDR database of an operator as it obtains the received CLI of the test call from the receiver probe.

However in this case difficulties can arise when for example by accident a legitimate client makes a call to one of the receiver probes at the time a test call is originated and thus an incoming call is expected at the receiver probe. Then there exists a risk that the call made by the legitimate client will lead to the conclusion that the phone number of the legitimate client, which appears as the received CLI of the test call, is associated with a bypass, as this received CLI could match the criteria used for evaluating whether a bypass is present as explained in more detail below and subsequently the legitimate client's subscription might get deactivated. This must be avoided as this poses a serious risk to the level of client satisfaction of the telecommunication network under test as it causes unacceptable inconveniences to a legitimate client. Furthermore, the TCG solution depends on the ability to make sufficient test calls and to cover as much routes as possible.

The white paper "Bypass Fraud - Are you getting it right" published by Subex at www.subex.com on page 9-13 suggests to integrate FMS and TCG solutions into a hybrid bypass fraud detection platform to improve the effectiveness of bypass detection: maximize the hit rate, minimize the detection latency and further reduce the loss avoided by network operators through bypass fraud.

The known solutions, i.e. FMS or TCG platforms or hybrid platforms combining FMS and TCG, may encounter situations wherein the criteria used to detect interconnect bypass activity are matched by a legitimate client as a result of which the legitimate client's subscription becomes deactivated.

The call behaviour of a legitimate subscription used by a call centre for instance closely resembles the call behaviour of a subscription that is used by a bypass operator: no incoming calls, no SMS traffic, high call diversity, etc. An FMS consequently runs the risk to deactivate legitimate subscriptions used by call centres. As mentioned above, an additional problem of an FMS is that a high number of events is needed before statistically relevant measures can be obtained. For instance, the call diversity might be irrelevant as long as less than 15 à 25 calls are taken into account.

A TCG platform on the other hand runs the risk that an inadvertent call made by a legitimate subscriber to one of the probes at a point in time whereon a test call is expected to arrive at this probe is considered to originate from an interconnect bypass as a result of which the legitimate subscription will be deactivated.

Such false positive bypass detections by traditional FMS or TCG platforms occur more often since bypass operators implement anti-detection measures that artificially adapt their call behaviour to make it resemble normal subscribers behaviour and/or hide their CLIs.

It is therefore an objective of the present invention to disclose a system and method for detection, identification and/or deactivation of one or more subscriptions used by an interconnect bypass with a reduced risk for false positive detections, i.e. a reduced risk of concluding that a subscription of a legitimate client is in use by a bypass operator, and/or the ability to work with a lower amount of events, e.g. test calls or CDR lines, in order to reduce the bypass detection latency, and/or less sensitive to human behaviour or detection avoidance behaviour implemented by interconnect bypass operators.

### Summary of the Invention

According to the present invention the above identified objective is realized by a system for detection of a bypass of an interconnect to a telecommunication network as defined by claim 1, the system comprising:
- an interface to a relations database wherein relationship information between entities is maintained; and
- a social network analysis subsystem, operationally coupled to the interface and configured to consult the relations database, to analyze relationship information between entities to detect one or more social network, a social network being a plurality of interrelated entities, and to identify an entity as being used to bypass the interconnect to the telecommunication network in case of:
- absence of a social network where the entity belongs to; and/or
- presence of one or more abnormal social network where the entity belongs to;
- absence of a social network between entities related to the entity; and/or
- presence of one or more abnormal social network between entities related to the entity.

Thus, the system according to the present invention verifies if a social network is existing where an entity or relations of entity belong to. An entity in the context of the present invention represents a subscription with the network under test, a subscription with a different network or an identity of a person or company or organization as used in telecommunication networks (e.g. a SIM, e-mail address, etc.), in social network tools (e.g. a Facebook account, an Instagram account, a LinkedIN account, etc.), in bank transactions, etc. Such entity is identified as being used for bypass activity when it does not belong to any social network at all (e.g. an isolated entity that only makes calls to different numbers), when it belongs to an abnormal social network (e.g. a social network wherein all entities are located in the same geographical cell, i.e. in the same SIMbox, or a social network wherein the entity is never called first, etc.), when there is no social network between relations of the entity (e.g. no calls are made between the called parties of an entity), or when there is an abnormal social network between relations of the entity. Existence or absence of a social network between entities is verified by consulting a relations database wherein relationship information between entities is maintained, for instance a graph database. The relationship information in such relations database may for instance be obtained from the CDRs of network operators that contain historic information on calls between entities that can be exploited through algorithms to establish a relations map of direct and indirect relationships between entities. Such relations database is for instance described in United States Patent Application US 2011/0142217 entitled "Methods and Systems for Mass Link Analysis Using Rule Engines". In embodiments of the invention, the relations database does not necessarily contain aggregated information like a graph database but also may correspond to a CDR database or to individual CDRs which inherently contain information on communications between entities and consequently also inherently contain information on relations between those entities. A social network is a structure composed of entities, i.e. individuals or organizations, that are interconnected through one or more interdependencies such as friendship, professional relations, communication exchanges, financial exchanges, etc. The existence of a call history between entities, as can be determined from CDRs, for instance indicates that a social network exists between these entities. Alternatively, consultation of social network websites or applications like LinkedIN, Facebook, Twitter, Instagram, etc. may be used to establish if a social network exists or not between entities. Since an entity that is used by an interconnect bypass, e.g. represented by a SIM card, typically calls diverse parties that have no interdependencies, e.g. no family members, no friends, no professional relationship, etc., absence of a social network between the relations of an entity indicates that the entity is not legitimate. The entities that are called by a legitimate client will typically form part of one or more social networks. These entities for instance constitute family members, e.g. his mother, his father, his sister, his brother who typically also call each other, or work colleagues who typically also call each other, or members of the same sports club who typically also call each other, etc. A SIMbox on the other hand calls random numbers. Because they are random numbers, no social network(s) exist(s) between them. Absence of a social network between the relations of an entity consequently indicates that such entity may be in use by a bypass operator. Alternatively or supplementary, absence of a social network where an entity forms part of or presence of abnormal social network(s) where an entity forms part of or where relations of an entity form part of may indicate or confirm that the entity is in use by a bypass operator. An abnormal social network may for instance be a social network consisting of entities that all reside in the same geographical cell of a cellular network. The presence of such social network may indicate that the entity, e.g. a SIM card, is used to call other SIM cards in use by the same bypass operator and installed in the same SIMbox, behavior that is deployed by bypass operators to reduce call diversity and/or improve other statistical measures that are monitored by FMS tools in order to reduce their detectability by such FMS tools.

Optionally, as defined by claim 2, the social network analysis subsystem in the system for detection of a bypass of an interconnect to a telecommunication network according to the present invention comprises:
- an algorithm repository adapted to store one or more algorithm specifying how to detect a social network between entities from relationship information in the relations database indicative for interaction between the entities; and
- an algorithm engine, coupled to said algorithm repository and configured to execute the one or more algorithm to thereby detect the one or more social network.

Indeed, the social network analysis subsystem preferably stores and executes one or several algorithms that specify when a social network is existing or absent between entities based on relationship information that can be obtained from the relations database and that is indicative for interaction between these entities and/or relations of these entities. Relations of the entities may be direct relations, i.e. first level relations, or relations of direct relations, i.e. second level or further level relations, depending on the algorithm. In the following paragraphs, several examples of such algorithms will be described.

According to an optional aspect defined by claim 3, the algorithm repository in the system for detection of a bypass of an interconnect to a telecommunication network according to the present invention stores an algorithm that specifies:
- determining an amount of relations between entities that are first level relations of the entity; and
- detecting presence of a social network when the amount of relations exceeds a certain threshold.

Hence, one measure to detect presence of a social network for an entity may for instance be the number of relations between direct relations of that entity. If the number of relations between its direct relations exceeds a certain threshold, the entity and its direct relations are assumed to form part of a social network because the interaction between them is considered to be sufficiently tense. The algorithm in other words discriminates between entities that have direct relations who do not interact and entities that have direct relations that also interact with each other in order to detect the presence of a social network.

According to an optional aspect defined by claim 4, the algorithm repository in the system for detection of a bypass of an interconnect to a telecommunication network according to the present invention stores an algorithm that specifies:
- determining an amount of relations having a minimum duration between entities that are first level relations of the entity; and
- detecting presence of a social network when the amount of relations having a minimum duration exceeds a certain threshold.

Thus, a refinement of the above algorithm for detecting social networks or complementary way to detect social networks consists in considering only relations that have a minimum duration. In case SIMboxes or more generally bypass entities attempt to simulate human behavior, e.g. through artificial interactions between SIM cards or entities in the same SIMbox, it will remain possible to discriminate such entities from legitimate entities by involving the duration of relations. Entities that are used for bypass operations typically have a short lifetime and consequently also relations with other entities are short in duration.

According to an optional aspect defined by claim 5, the algorithm repository in the system for detection of a bypass of an interconnect to a telecommunication network according to the present invention stores an algorithm that specifies:
- determining a ratio of existing relations between entities that are first level relations of the entity versus a theoretic amount of possible relations between the first level relations or versus a typical amount of relations between legitimate entities; and
- detecting presence of a social network when the ratio exceeds a certain threshold.

Thus, an alternative or complementary algorithm may detect the presence of a social network by comparing the number of relations that exist between directly connected entities versus the total amount of possible relations between the directly connected relations. Only when the ratio between these numbers exceeds a certain threshold, the algorithm concludes that a social network is present. This way, the social network analysis subsystem will discriminate between entities that have only a few direct relations which interact, e.g. a few SIM cards used in the same SIMbox, and legitimate entities the majority of whose direct relations interact with each other.

According to an optional aspect defined by claim 6, the algorithm repository in the system for detection of a bypass of an interconnect to a telecommunication network according to the present invention stores an algorithm that specifies:
- determining call diversity for the entity from the amount of different first level relations of the entity; and
- detecting absence of a social network where the entity belongs to when the call diversity exceeds a certain threshold.

Thus, the social network analysis subsystem may be able to determine forms a call diversity for an entity, e.g. through counting the number of different direct relations of an entity and comparing that number or a derivative thereof to a certain threshold. When the call diversity exceeds the threshold, the high call diversity indicates absence of a social network and the entity is identified as being used for interconnect bypass.

According to an optional aspect defined by claim 7, the algorithm repository in the system for detection of a bypass of an interconnect to a telecommunication network according to the present invention stores an algorithm that specifies:
- determining a ratio of first level relations of the entity that have international relations versus a total amount of first level relations of the entity; and
- detecting presence of an abnormal social network when the ratio of first level relations with international relations exceeds a certain threshold.

Indeed, a high ratio of direct relations that have international connections is considered an abnormal social network. In case the majority of calls made by an entity is destined to parties or entities that each received international calls in the past, i.e. which each have an international social network, the entity will be identified as being used by an interconnect bypass operator. In general, less than 20 % of the subscriptions of telecom operators have an international social network and consequently make/receive international calls. A legitimate subscriber therefore is assumed to also make calls to parties or entities that have no international social network and consequently never or less often made/received international calls. A subscription that is used for fraudulent interconnect bypass on the contrary intercepts international calls and routes those international calls via cheaper on-net calls to their destinations, which obviously are all destinations that receive international calls and therefore have an international social network. It is noticed that verification if called entities each have an international social network to establish if an entity has an abnormal social network may be executed in addition to or independent from verification if a social network exists between direct relations, and in any case constitutes an additional improvement in avoiding false positive bypass detections.

According to an optional aspect defined by claim 8, the algorithm repository in the system for detection of a bypass of an interconnect to a telecommunication network according to the present invention stores an algorithm that specifies:
- determining a ratio of unidirectional first level relations of the entity versus a total amount of first level relations of the entity; and
- detecting presence of an abnormal social network when the ratio of unidirectional first level relations exceeds a certain threshold.

In the context of this invention, direction of a relation refers to direction wherein connectivity or interaction between entities is established. Normal relations in social networks are two-way or bidirectional, i.e. both parties call each other and both parties receive calls from each other. An entity that is used for interconnection bypass in theory only has one-way relations because the entity only makes outgoing calls. Therefore, the social network analysis subsystem according to the present invention may identify a social network with mainly unidirectional relations as abnormal and the entity central to such social network may be identified as being used for interconnection bypass.

According to an optional aspect defined by claim 9, the algorithm repository in the system for detection of a bypass of an interconnect to a telecommunication network according to the present invention stores an algorithm that specifies:
- determining a ratio of called first relations of the entity versus a total amount of first level relations of the entity, a called first relation being a relation of the entity that called the entity before being called back by the entity; and
- detecting presence of an abnormal social network when the ratio of called first relations is below a certain threshold.

Indeed, an entity, e.g. a SIM card, that is used for interconnect bypass typically is never called first. A sequence of incoming call from a party and outgoing call to that same party in theory never happens for an entity that is used for bypass. Such entity is only called in case of call interruption or in case somebody calls back the SIM card because its number is in the received call list. In case the direct relations of an entity consists mostly of called first relations, i.e. direct relations that are always called first by the entity, the social network analysis subsystem according to the present invention therefore shall report an abnormal social network and identify the entity as being used for interconnection bypass.

According to an optional aspect defined by claim 10, the algorithm repository in the system for detection of a bypass of an interconnect to a telecommunication network according to the present invention stores an algorithm wherein bidirectional relations are weighted higher than unidirectional relations in detecting presence of a social network where the entity forms part of.

Indeed, as explained here above, a relation can be one way or two way. In detecting the presence of a social network where an entity belongs to, the social network analysis subsystem according to the present invention might value two way relations higher than one way relations. As a consequence, an entity will be considered to form part of a social network only if it has a substantial amount or fraction of two way relations.

According to an optional aspect defined by claim 11, the algorithm repository in the system for detection of a bypass of an interconnect to a telecommunication network according to the present invention stores an algorithm wherein older relations are weighted higher than more recent relations in detecting presence of a social network where the entity forms part of.

Indeed, involving longer existing or older relations and weighting such relations higher than more recent relations in the assessment of social networks existence will enable to discriminate legitimate entities that typically have older relations from bypass entities that simulate human behavior but whose relations are always recent because the lifetime of an entity that is used for interconnection bypass is typically short and so are its relations.

According to an optional aspect defined by claim 12, the algorithm repository in the system for detection of a bypass of an interconnect to a telecommunication network according to the present invention stores an algorithm wherein distant relations, i.e. non-direct relations, are considered in detecting presence of a social network.

Thus, in determining if a social network exists where an entity forms part of, or in determining if a social network exists between direct relations of an entity, also more distant relations like second level relations or third level relations and relations between such more distant relations may be considered. As a consequence, a relationship can be close, e.g. two entities having a direct relation, or a relationship can be more distant, e.g. two entities have a common relation, and the distance of relationships can play a role in the assessment of the presence or absence of a social network. More distant relationships for instance me be given lower weights in the algorithms applied by the social network analysis subsystem according to the present invention because the coincidental existence of such distant relationship may not automatically lead to the conclusion that a social network is existing, or they may be given higher weights because such distant relationships are more difficult to establish by entities that resemble human behavior in an attempt to remain invisible.

According to an optional aspect defined by claim 13, the algorithm repository in the system for detection of a bypass of an interconnect to a telecommunication network according to the present invention stores an algorithm wherein evolution of relations over time is considered in detecting presence of a social network.

Hence, evolution of the social networks may be monitored to detect for instance that an entity, e.g. a SIM card, is moved to an interconnect bypass, e.g. a SIM box. Historic information on the relations may be considered, at least for a certain history period, to detect a change in the social network(s) of entities that enables the social network analysis subsystem according to the present invention to conclude that an entity is started to being used for interconnect bypass.

As further specified by claim 14, in the system for detection of a bypass of an interconnect to a telecommunication network according to the present invention, the relationship information may comprise one or more of:
- a relationship map;
- a history of voice calls;
- a history of data communication;
- a history of bank transactions;
- connectivity and distance information from social network tools;
- information on relatives;
- kinship information;
- ownership information.

Indeed, when voice or data communication is existent between entities, a social network between these entities may be assumed present. Existence of voice and/or data communication between entities may for instance be verified through consultation of the CDRs. One embodiment of the present invention in other words considers CDRs or other historic data on voice and/or data calls between entities in order to establish and regularly update the relationship information in the relations database. Data calls in this context must be interpreted broadly to cover one or more of the exchange of text messages such as SMS messages or i-messages, chat threads such as WhatsApp messages, e-mail messages, pictorial information such as photos, e.g. through Instagram or Facebook, videoconferences or teleconferences, e.g. through Skype, etc. In addition to or as an alternative to voice and data communication information, the relationship information may comprise information on financial transactions between entities (including transactions of call credit or airtime), information indicative for the connectivity between entities in social network tools like LinkedIN, e.g. the distance or number of hops between persons in LinkedIN. Further, knowledge of family bonds (e.g. parents, children, grand-parents, etc.), kinship information (e.g. engagement, students, etc.), ownership (for instance between legal entities like companies, organizations, etc.) or membership information (of a sports club, arts academy, etc.), when available, can be exploited in addition to or as an alternative to voice/data communication information to establish relations between entities and detect presence or absence of social networks.

According to an optional aspect defined by claim 15, the system according to the present invention further comprises:
- a first subsystem configured to identify based on at least a first criterion a suspicious entity that is likely used to bypass the interconnect to the telecommunications network;
- the social network analysis subsystem being operationally coupled to the first subsystem and being configured to consult the relations database and analyze relationship information for entities related to the suspicious entity to confirm the suspicious entity is used to bypass the interconnect to the telecommunications network.

Thus, the social network analysis subsystem according to the present invention may advantageously be combined with other subsystems that detect suspicious entities, i.e. entities that are likely used for interconnect bypass. Such other subsystem may for instance identify a suspicious entity through analysis of CDRs or signaling as is done in an FMS, through test calls and CLI analysis as is done in a TCG system, or through a combination of FMS and TCG. Thereafter, the social network analysis subsystem may verify if a social network is existing where the suspicious entity forms part of and/or if a social network is existing between relations of the suspicious entity and/or if abnormal social networks exist where the suspicious entity or its relations form part of. Only if no social network exists where the suspicious entity forms part of and/or no social network exists between relations of the suspicious entity and/or an abnormal social network exists where the suspicious entity or its relations form part of, the suspicious entity will be identified as being used for interconnect bypass fraud. This way, the social network analysis subsystem reduces or mitigates false positive results that come out of the other, first subsystem, and avoids that a network operator takes measures such as SIM card deactivation for legitimate clients.

It is noticed that the findings of a subsystem based on test calls, FMS or a combination thereof, may further be used to determine the social network profile of suspicious entities which eventually may lead to adaptation of the algorithms or parameter settings used by the social network analysis system. If for instance a bypass operator implements human behavior or anti-detection behavior as a result of which an entity that is used for bypass operations is no longer detected through social network analysis, this human behavior or anti-detection behavior to mimic the presence of social networks may be uncovered through analysis of the social network profile of a bypass entity that is detected through other techniques such as FMS or TCG. Once the social network profile of such bypass entities is known, the algorithms used in the social network analysis system may be adapted or certain parameters such as thresholds may be adapted in order to enable the social network analysis system to continue to detect also bypass entities that implement anti-detection measures.

According to a further optional aspect defined by claim 16:
the first subsystem in the system for detection of a bypass of an interconnect to a telecommunication network according to the present invention comprises a fraud management system or FMS configured to analyze call detail records or CDRs of the telecommunication network, and the first criterion comprises a match between a call profile of the suspicious entity and a model call profile of an entity used to bypass an interconnect.

Indeed, the first subsystem typically shall implement an existing method for identifying entities that are in use by a bypass operator, but which is vulnerable to false positive detection. One such existing method is profiling based on information received from the network operator's CDRs, as is implemented in a traditional FMS. The profiling is vulnerable to false positive detection since bypass operators tend to implement anti-detection measures that artificially influence their profile(s) in order to better resemble the profile(s) of legitimate clients. Distinguishing legitimate entities from fraudulent entities based on CDR information and profiling hence becomes more prone to false positive detection. Bypass operators however cannot influence the social network of entities called by a fraudulent entity without substantial communication costs as a result of which analysis of the social network of entities or parties called by a suspicious entity will help to distinguish legitimate entities from interconnect bypass entities.

Further optionally, as defined by claim 17, in the system for detection of a bypass of an interconnect to a telecommunication network according to the present invention, the relations database may be configured to access the CDRs to establish the relationship information.

Indeed, the CDRs that are used by the FMS, i.e. the first subsystem that identifies suspicious entities, may also be exploited by the relations database that lies at the basis of the second subsystem, i.e. the social network analysis subsystem that will confirm that the suspicious entity is effectively used for interconnect bypass. This may bring additional advantages. For instance, in case the suspicious entity receives only incoming calls from a party shortly after an outgoing call is made to that party, this may be considered as an additional indication that the suspicious entity is used for interconnect bypass. In embodiments wherein the second subsystem, i.e. the social network analysis subsystem is coupled to the network operator's CDRs, this additional check can be made easily. A subscription that is used for interconnect bypass typically is never called. Only in situations where the re-routed on-net call from the fraudulent subscription to the destination is interrupted, e.g. as a result of poor quality or as a result of anti-detection measures implemented by the bypass operator, the destination may attempt to call back hence generating an incoming call for the fraudulent subscription, or in a situation where a call was missed the destination may attempt to call back to a bypass entity from the missed call list. In case a suspicious entity receives also incoming calls from entities it did not call, the social network analysis subsystem in the present invention may identify the suspicious entity as a false positive result of the FMS subsystem. Consequently, no further action will be taken against such subscription.

The second subsystem, i.e. the subsystem that analyzes the social network, may also be exploited to filter the entities for which an FMS will apply profiling. This way, an FMS is made more efficient and faster. Social network analysis by the second subsystem indeed may reveal which entities have an international social network, information that the social network analysis subsystem can derive from the CDRs or relations database. Only such entities must be investigated for being used by an interconnect bypass. An FMS in other words may concentrate CDR based profiling on entities that have an international social network in order to become more efficient and faster.

According to yet another optional aspect defined by claim 18, the first subsystem in the system for detection of a bypass of an interconnect to a telecommunication network according to the present invention may comprise a test call platform configured to schedule and execute test calls from probes in a different telecommunication network to a probe in the telecommunication network under test, and the first criterion may comprise a comparison between expected and received caller line identifications for one of the test calls and a received calling line identification which in case of mismatch enables to identify the suspicious entity.

As already mentioned above, the first subsystem typically shall implement an existing method for identifying entities that are in use by a bypass operator, but which is vulnerable to false positive detection. One such existing method is based on test calls scheduled and controlled by a so called TCG platform. Such TCG platform is vulnerable to false positive bypass detection because a legitimate client may make an unintentional call to a probe of the TCG platform at a point in time a test call to that probe is scheduled. The subscription of such legitimate client will then be considered suspicious by the TCG platform. Through verification of the existence of social network(s) between the entities called by the suspicious subscription, the social network analysis subsystem will prevent that the subscription of the legitimate client is deactivated. The entities called by a legitimate client will form part of one or more social networks as a result of which the social network analysis subsystem will identify the suspicious subscription as a false positive result of the TCG platform.

In addition to a system as defined by claim 1, the present invention also concerns a corresponding method for detection of a bypass of an interconnect to a telecommunication network as defined by claim 19, the method comprising:
- consulting relationship information between entities maintained in a relations database;
- analyzing relationship information between entities to detect one or more social network, a social network being a plurality of interrelated entities; and
- identifying an entity as being used to bypass the interconnect to the telecommunication network in case of:
- absence of a social network where the entity belongs to; and/or
- presence of one or more abnormal social network where the entity belongs to;
- absence of a social network between entities related to the entity; and/or
- presence of one or more abnormal social network between entities related to the entity.

### Brief Description of the Drawings

Fig. 1 illustrates a first embodiment 120 of the system for interconnect bypass detection in a communications network under test 110 operating according to the present invention;
Fig. 2A and Fig. 2B respectively show a first relations graph and corresponding relationship information maintained in the relations database 130 of Fig. 1;
Fig. 3A and Fig. 3B respectively show a second relations graph and corresponding relationship information maintained in the relations database 130 of Fig. 1;
Fig. 4 illustrates a second embodiment 420 of the system for interconnect bypass detection in a communications network under test 410, operating according to the present invention;
Fig. 5 illustrates a third embodiment 520 of the system for interconnect bypass detection in a communications network under test 510, operating according to the present invention;
Fig. 6 illustrates a fourth embodiment 620 of the system for interconnect bypass detection in a communications network under test 610, operating according to the present invention; and
Fig. 7 shows a computing system suitable for hosting the system for bypass detection according to the present invention and suitable for implementing the method for bypass detection according to the present invention.

### Detailed Description of Embodiment(s)

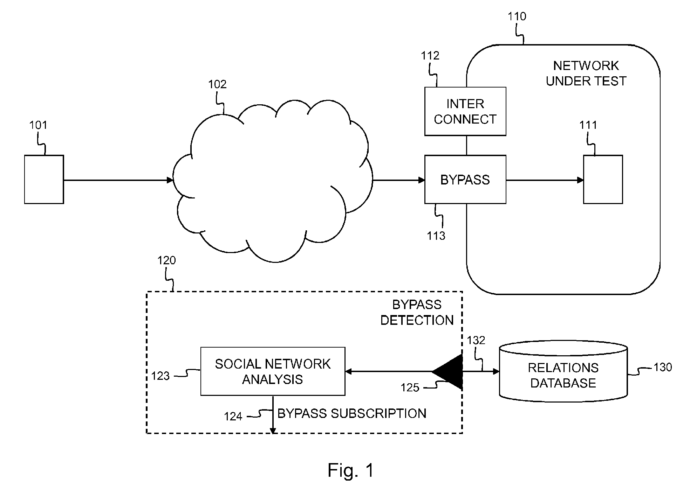

Fig. 1 shows a system 120 for detection of a bypass 113 of an interconnect 112 to a telecommunication network under test 110. An off-net call originating from an end-user facility 101 in a network different from the network under test 110, e.g. a smartphone equipped with a SIM card of a user of network 110 that is travelling abroad or a subscriber of a foreign operator and making a call to a destination 111 in the network under test 110, is supposed to pass through the interconnect facility 112 between the network of the roaming operator and network 110 or between any intermediate operator's network 102 and network 110. The bypass 113 however may intercept the call from end-user facility 101 to terminal 111, setup an on-net call from the bypass 113 to the terminal 111 in the network 110 and inject the bi-directional voice information exchanged between end-user facility 101 and terminal 111 in this on-net call.

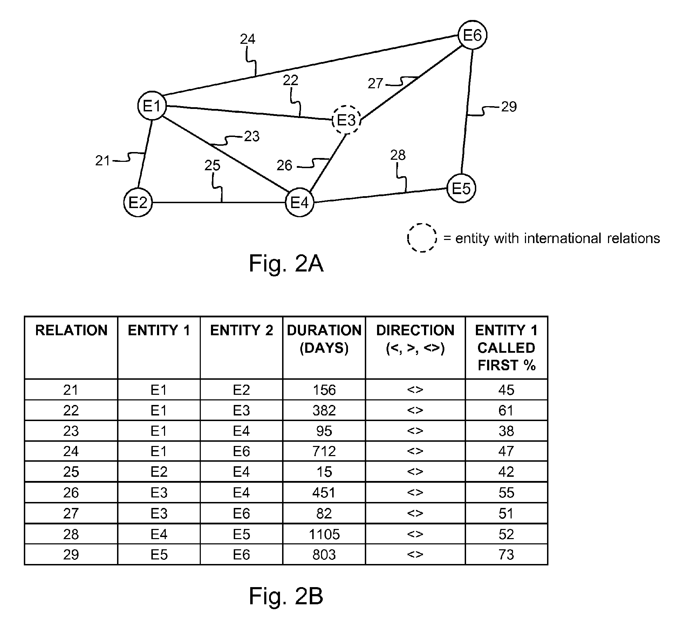

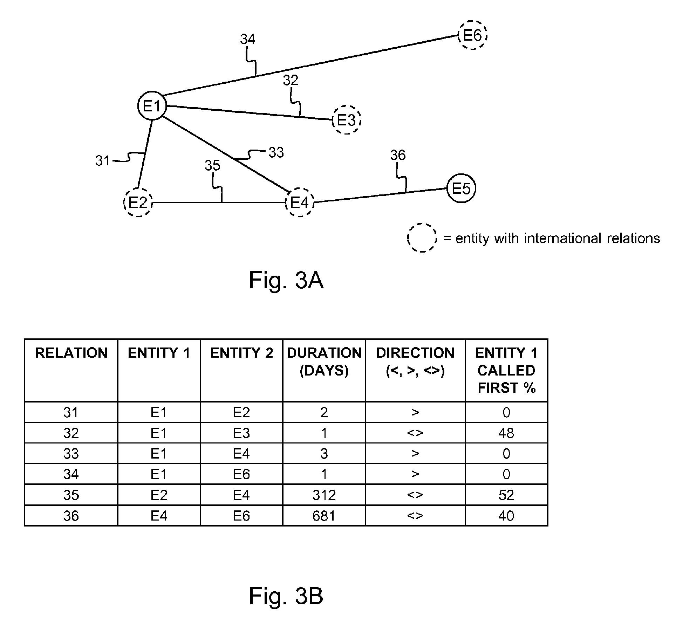

The bypass detection system 120 comprises a social network analysis subsystem 123 and an interface 125 towards a relations database 130 that maintains relationship information between entities. Examples of the relationship information maintained by relations database 130 are illustrated by Fig. 2B and Fig 3B, described in more detail below. The social network analysis subsystem 123 contacts the relations database 130 to obtain such relationship information 132. The received information 132 is analysed by the social network analysis subsystem 123 in order to determine if one or more social network exists where a particular entity forms part of and/or one or more social network exists between direct relations of such entity and/or one or more abnormal social network exists where such entity forms part of. If no social network exists where an entity forms part of and/or no social network exists between direct relations of an entity and/or an abnormal social network exists where the entity forms part of, the social network analysis subsystem 123 identifies such entity, e.g. subscription 124, as being used for interconnect bypass. The social network analysis subsystem 123 may perform the analysis for each entity where the relations database 130 contains information for, or for a single entity or a selection of entities that are suspected of being used for interconnect bypass. The analysis may be performed regularly, e.g. at predetermined periodic time intervals, or may be performed each time relationship information in the relations database 130 is updated. The entities may be subscriptions of the network under test 110, subscriptions of a different network, or identities of individual persons, companies or organizations that communicate over communications networks such as fixed or mobile telephone networks, digital data communication networks, social network tools, etc. As a result of such communication, relations are established and relationship information is maintained in the relations database 130.

Fig. 2A is a relations graph visualizing the relations existing between entities E1, E2, E3, E4, E5 and E6 in a first situation. Fig. 2A shows that a direct relation 21 exists between entities E1 and E2, a direct relation 22 exists between entities E1 and E3, a direct relation 23 exists between entities E1 and E4, a direct relation 24 exists between entities E1 and E6, a direct relation 25 exists between entities E2 and E4, a direct relation 26 exists between entities E3 and E4, a direct relation 27 exists between entities E3 and E6, a direct relation 28 exists between entities E4 and E5, and a direct relation 29 exists between entities E5 and E6. Fig. 2B shows the relationship information that is stored in relations database 130 in conjunction with the relations 21 ... 27 in the relations graph of Fig. 2A. For each relation, the relations database 130 contains an entry wherein the entities are stored between which the relation exists (i.e. the first entity or entity 1, and the second entity or entity 2), the duration of the relation (e.g. counted in days), the direction of the relation (i.e. unidirectional from the first entity to the second entity ">" in case all or nearly all communication is set up from the first entity to the second entity, unidirectional from the second entity to the first entity "<" in case all or nearly all communication is set up from the second entity to the first entity, or bidirectional "<>" in case the two entities call each other), and the percentage of communications where the first entity is called first (i.e. where the first entity receives an incoming call from the second entity before an outgoing call is established from the first entity to the second entity). For instance, the relation 21 between entity E1 and entity E2 exists 156 days and represents a bidirectional relation where in 45 % of the situations, entity E1 is first contacted by entity E2 before entity E1 contacts entity E2. Similarly, Fig. 2B shows that the relation 22 between entity E1 and entity E3 exists 382 days and represents a bidirectional relation where in 61 % of the situations, entity E1 is first contacted by entity E3 before entity E1 contacts entity E3. The relation 23 between entity E1 and entity E4 exists 95 days and represents a bidirectional relation where in 38 % of the situations, entity E1 is first contacted by entity E4 before entity E1 contacts entity E4. The relation 24 between entity E1 and entity E6 exists 712 days and represents a bidirectional relation where in 47 % of the situations, entity E1 is first contacted by entity E6 before entity E1 contacts entity E6. The relation 25 between entity E2 and entity E4 exists 15 days and represents a bidirectional relation where in 42 % of the situations, entity E2 is first contacted by entity E4 before entity E2 contacts entity E4. The relation 26 between entity E3 and entity E4 exists 451 days and represents a bidirectional relation where in 55 % of the situations, entity E3 is first contacted by entity E4 before entity E3 contacts entity E4. The relation 27 between entity E3 and entity E6 exists 82 days and represents a bidirectional relation where in 51 % of the situations, entity E3 is first contacted by entity E6 before entity E3 contacts entity E6. The relation 28 between entity E4 and entity E5 exists 1105 days and represents a bidirectional relation where in 52 % of the situations, entity E4 is first contacted by entity E5 before entity E4 contacts entity E5. At last, the relation 29 between entity E5 and entity E6 exists 803 days and represents a bidirectional relation where in 73 % of the situations, entity E5 is first contacted by entity E6 before entity E5 contacts entity E6.

The social network analysis subsystem 123 analyses the relationship information of Fig. 2B to detect if entity E1 is used for interconnect bypass. The social network analysis subsystem 123 thereto applies different algorithms. The social network analysis subsystem 123 for instance executes a first algorithm that counts the amount of relations existing between first level relations of E1, i.e. direct relations of E1, and concludes that a social network is existing between the direct relations of E1 when the amount of relations exceeds 1. The more relations existing between direct relations of E1, the more social network is existing as a result of which the entity becomes less suspicious. The other way round, the level of suspicion increases with reduced indications of social network, i.e. with smaller amount of relations existing between direct relations of E1. In the example of Fig. 2A and Fig. 2B, the direct relations of E1 are E2, E3, E4 and E6. Relations 25, 26 and 27 represent relations between direct relations of E1. The algorithm therefore concludes that a social network is existing between the direct relations of E1. An alternative algorithm that only counts relations with a minimum duration of for instance 30 days and applies a threshold of 1, would count two relations, i.e. relations 26 and 27 between the direct relations of entity E1, with a respective duration of 451 and 82 days. This alternative algorithm therefore would also conclude that a social network is existing between the relations of E1. A more advanced algorithm that also considers more distant relations, e.g. the existence of a common relation E5 between two direct relations E4 and E6 of entity E1, would also conclude that a social network is existing between the relations of E1. Yet another algorithm would determine the ratio of existing relations between direct contacts of E1, i.e. 3 existing relations 25, 26 and 27, versus the total amount of possible relations between direct contacts of E1, i.e. 6 possible relations. When this ratio exceeds a threshold of for instance 20 %, the algorithm would conclude that a social network is existing. In the situation illustrated by Fig. 2A and Fig. 2B, the ratio equals 50 % leading again to the conclusion that a social network is existing between the relations of E1. Even more advanced algorithms could take into account the directionality of the relations, e.g. consider only bidirectional relations or assign higher weights to bidirectional relations, or could take into account the percentage of called first communications, e.g. consider only relations where this percentage is between 20 % and 80 % or assign higher weights to relations where this percentage approaches 50 %. As a result of the presence of a social network between the direct relations of E1, these algorithms would all conclude that entity E1 is not used for interconnect bypass but represents a legitimate entity between whose direct contacts one or more social networks are existing.

The social network analysis subsystem 123 further applies algorithms that look for the existence of abnormal social networks where entity E1 forms part of. Such abnormal social network would for instance exist if more than 60 % of the direct relations of E1 would have international relations. As is indicated in Fig. 2A, only E3 has international relations. This means that only 25 % of the direct relations of E1 have international relations, which is no indication of the existence of an abnormal social network. An alternate algorithm would for instance conclude that an abnormal social network is existing in case more than 70 % of the direct relations of E1 are unidirectional, outgoing relations, i.e. relations marked ">" when E1 is the first entity or marked "<" when E1 is the second entity. Since all relations in Fig. 2A are bidirectional, marked "<>" in Fig. 2B, the algorithm would conclude that no such abnormal social network exists for E1. Yet another algorithm would classify relations as "called first" relations when the percentage of called first communications is between 20 % and 80%. When the ratio of called first relations versus the total amount of direct relations stays below 30 %, the algorithm would for instance conclude that an abnormal social network is existing. In the example of Fig. 2A and Fig. 2B, all relations are "called first" relations, and the ratio of "called first" relations for E1 therefore is 100 %. For all of its direct relations, the communication sequence is sometimes that E1 is first called and thereafter calls back. As a consequence, also this algorithm will conclude that no abnormal social network is existing where E1 forms part of. Consequently, the social network analysis subsystem 123 will conclude on the basis of absence of abnormal social networks where E1 forms part of, that E1 is a legitimate entity that is not used for interconnect bypass.

Fig. 3A is a relations graph visualizing the relations existing between entities E1, E2, E3, E4, E5 and E6 in a second situation. Fig. 3A shows that a direct relation 31 exists between entities E1 and E2, a direct relation 32 exists between entities E1 and E3, a direct relation 33 exists between entities E1 and E4, a direct relation 34 exists between entities E1 and E6, a direct relation 35 exists between entities E2 and E4, a and direct relation 36 exists between entities E4 and E5. Fig. 3B shows the relationship information that is stored in relations database 130 in conjunction with the relations 31 ... 36 in the relations graph of Fig. 3A. For each relation, the relations database 130 contains an entry wherein the entities are stored between which the relation exists (i.e. the first entity or entity 1, and the second entity or entity 2), the duration of the relation (e.g. counted in days), the direction of the relation (i.e. unidirectional from the first entity to the second entity ">" in case all or nearly all communication is set up from the first entity to the second entity, unidirectional from the second entity to the first entity "<" in case all or nearly all communication is set up from the second entity to the first entity, or bidirectional "<>" in case the two entities call each other), and the percentage of communications where the first entity is called first (i.e. where the first entity receives an incoming call from the second entity before an outgoing call is established from the first entity to the second entity). For instance, the relation 31 between entity E1 and entity E2 exists 2 days and represents a unidirectional relation from E1 to E2 where in 0 % of the situations, entity E1 is first contacted by entity E2 before entity E1 contacts entity E2. Similarly, Fig. 3B shows that the relation 32 between entity E1 and entity E3 exists 1 day and represents a bidirectional relation where in 48 % of the situations, entity E1 is first contacted by entity E3 before entity E1 contacts entity E3. The relation 33 between entity E1 and entity E4 exists 3 days and represents a unidirectional relation from E1 to E4 where in 0 % of the situations, entity E1 is first contacted by entity E4 before entity E1 contacts entity E4. The relation 34 between entity E1 and entity E6 exists 1 day and represents a unidirectional relation from E1 to E6 where in 0 % of the situations, entity E1 is first contacted by entity E6 before entity E1 contacts entity E6. The relation 35 between entity E2 and entity E4 exists 312 days and represents a bidirectional relation where in 52 % of the situations, entity E2 is first contacted by entity E4 before entity E2 contacts entity E4. At last, the relation 36 between entity E4 and entity E5 exists 681 days and represents a bidirectional relation where in 40 % of the situations, entity E4 is first contacted by entity E5 before entity E4 contacts entity E5.

The social network analysis subsystem 123 analyses the relationship information of Fig. 3B to detect if entity E1 is used for interconnect bypass. The social network analysis subsystem 123 thereto applies different algorithms. The social network analysis subsystem 123 executes a first algorithm that counts the amount of relations existing between first level relations of E1, i.e. direct relations of E1, and concludes that a social network is existing between the relations of E1 when the amount of relations exceeds 2. In the example of Fig. 3A and Fig. 3B, the direct relations of E1 are E2, E3, E4 and E6. Relation 35 represent the sole relation between direct relations of E1. The algorithm therefore concludes that no social network is existing between the direct relations of E1. An alternative algorithm that only counts relations with a minimum duration of for instance 30 days and applies a threshold of 1, would also count one relations, i.e. relation 35, between the direct relations of entity E1, with a respective duration of 312 days. This alternative algorithm therefore also concludes that no social network is existing between the relations of E1. A more advanced algorithm that also considers more distant relations, e.g. the existence of a common relation between two direct relations of entity E1, also concludes that no social network is existing between the relations of E1 because no such common relation exists for E2, E3, E4 and E6. Yet another algorithm determines the ratio of existing relations between direct contacts of E1, i.e. 1 existing relation 35, versus the theoretic total amount of possible relations between direct contacts of E1, i.e. 6 possible relations. When this ratio exceeds a threshold of 20 %, the algorithm concludes that a social network is existing. In the situation illustrated by Fig. 3A and Fig. 3B, the ratio equals 16,67 % leading again to the conclusion that no social network is existing between the relations of E1. Even more advanced algorithms could take into account the directionality of the relations, e.g. consider only bidirectional relations or give higher weight to bidirectional relations, or could take into account the percentage of called first communications, e.g. consider only relations where this percentage is between 20 % and 80 % or give higher weights to relations where this percentage approximates 50 %. As a result of the absence of a social network between the direct relations of E1, these algorithms all conclude that entity E1 is used for interconnect bypass. E1 therefore is identified as a bypass entity or bypass subscription 124 by the social network analysis subsystem 123.

The social network analysis subsystem 123 further applies algorithms that look for the existence of abnormal social networks where entity E1 forms part of. Such abnormal social network would for instance exist if more than 60 % of the direct relations of E1 would have international relations. As is indicated in Fig. 3A, E2, E4 and E6 have international relations. This means that 75 % of the direct relations of E1 have international relations, which is an indication of the existence of an abnormal social network. An alternate algorithm would for instance conclude that an abnormal social network is existing in case more than 70 % of the direct relations of E1 are unidirectional, outgoing relations, i.e. relations marked ">" when E1 is the first entity or marked "<" when E1 is the second entity. Since 31, 33 and 34 are unidirectional outgoing relations, 75 % of the direct relations of E1 are unidirectional and outgoing. As a consequence, the algorithm will conclude that an abnormal social network exists for E1. Yet another algorithm would classify relations as "called first" relations when the percentage of called first communications is between 20 % and 80%. When the ratio of called first relations versus the total amount of direct relations stays below 30 %, the algorithm concludes that an abnormal social network is existing. In the example of Fig. 3A and Fig. 3B, the relations 31, 33 and 34 are "called first" relations, and the ratio of "called first" relations for E1 therefore is 25 %. As a consequence, also this algorithm will conclude that an abnormal social network is existing where E1 forms part of. Consequently, the social network analysis subsystem 123 will conclude on the basis of presence of abnormal social networks where E1 forms part of, that E1 is an entity that is used for interconnect bypass. The fact that a relation 35 exists between two direct relations of E1 is coincidental. The relation 33 between bypass entity E1 and entity E3 indicates that the bypass operator may have taken measures to mimic human behaviour. The entities E1 and E3 regularly call each other, but the duration of this relation indicates that E3 might be an entity, e.g. a SIM card, that is located in the same SIMbox or in use by the same bypass operator and programmed to improve certain statistics, e.g. the call diversity of E1 in order to make E1 less detectable through traditional technologies such as FMS. Further investigation of the duration of the calls made between E1 and E3 may help to detect if E3 is really used hide the bypass activity of E1. If this is the case, the calls between E1 and E3 shall typically be short to minimize costs and unavailability of E1 for bypass activity.

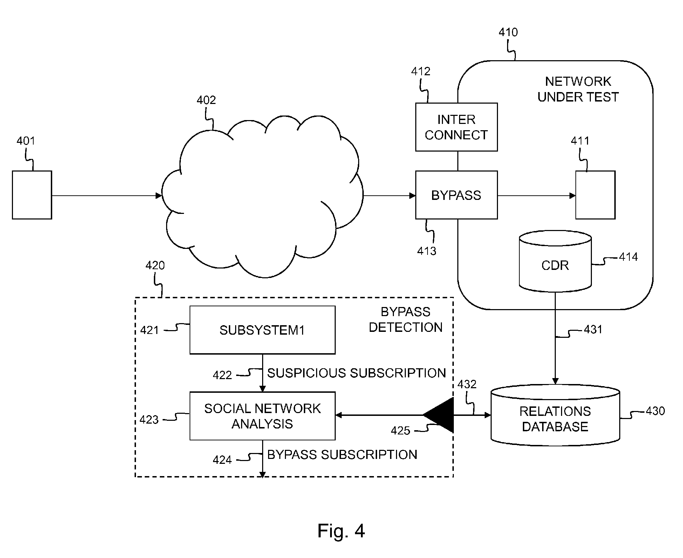

Fig. 4 shows a second embodiment of the system 420 for detection of a bypass 413 of an interconnect 412 to a telecommunication network under test 410. An off-net call originating from an end-user facility 401 in a network different from the network under test 410, e.g. a smartphone equipped with a SIM card of a user of network 410 that is travelling abroad and making a call to a destination 411 in its home network 410 using the visitor network of a roaming operator, is supposed to pass through the interconnect facility 412 between the network of the roaming operator and network 410 or between any intermediate operator's network 402 and network 410. The bypass 413 however may intercept the call from end-user facility 401 to terminal 411, setup an on-net call from the bypass 413 to the terminal 411 in the network 410 and inject the bi-directional voice information exchanged between end-user facility 401 and terminal 411 in this on-net call.

A first subsystem 421 in the second embodiment of the system 420 according to the present invention identifies an entity, e.g. a subscription with the network under test 410, that is likely used by the bypass 413 to place the on-net call to terminal 411. The first subsystem 421 may for instance analyze the behaviour and call profile of subscriptions in the network under test 410, e.g. through monitoring the signalling or through mining the CDR database 414 of the network under test 410, may analyze test calls that are placed from robots outside the network under test 410 to robots inside the network under test 410, the robots either being subscriptions or SIM cards reserved for test calls or being subscriptions or SIM cards effectively used by subscribers in the various networks, or may combine analysis of call profiles with analysis of test calls, to conclude that an entity, e.g. a subscription with the network under test 410, is suspicious. The first subsystem 421 reports such suspicious subscription 422 to a second subsystem 423 of the system 420 which is a social network analysis subsystem.

The social network analysis subsystem 423 via the interface 425 consults a relations database 430 that maintains relationship information between entities. Thanks to the first subsystem 421, the social network analysis subsystem 423 can concentrate efforts on the suspicious subscription 422 and analyse only relationship information for relations of the suspicious entity 422, i.e. direct or indirect relations. The social network analysis subsystem 423 analyses the relationship information in a manner similar to the social network analysis subsystem 123 known from Fig. 1. In Fig. 4, the relations database 430 at least receives CDR information 431 from the CDR database 414 of network 410. The CDR information 431 is used to establish and update relationship information between entities that are known by network 410, i.e. individuals or organizations that have a subscription in network 410. The second subsystem 423 of system 420 contacts the relations database 430 to obtain such relationship information 432 for entities or parties that were called in the past by the reported suspicious subscription 422, i.e. direct relations of the suspicious entity 422. The received relationship information 432 is analyzed by the social network analysis subsystem 432 in order to determine if one or more social networks exist where relations of the suspicious entity 422 form part of, or if one or more abnormal social network exist where the suspicious entity forms part of. The applied algorithms may be similar to the ones described here above in relation to social network analysis subsystem 123 of Fig. 1. If social network(s) is/are existing between the relations of a suspicious entity 422 and no abnormal social networks are existing where the suspicious entity 422 forms part of, this is an indication that the suspicious subscription 422 is in use by a legitimate client/subscriber of network 410 whose contacts themselves are also calling each other. In such case, the suspicious subscription 422 is identified as a false positive result by the social network analysis subsystem 423 and the system 420 shall not identify the suspicious subscription 422 as a bypass subscription. Consequently, the suspicious subscription 422 shall not be deactivated by the network operator of network 410. On the contrary, if no social network exists between relations of the suspicious subscription 422 and/or abnormal social network(s) exist where the suspicious entity 422 forms part of, the social network analysis subsystem 423 will identify the suspicious subscription 422 as a bypass subscription 424. The network operator of network 410 will be informed thereof and may take measures like deactivation of the bypass subscription 424.

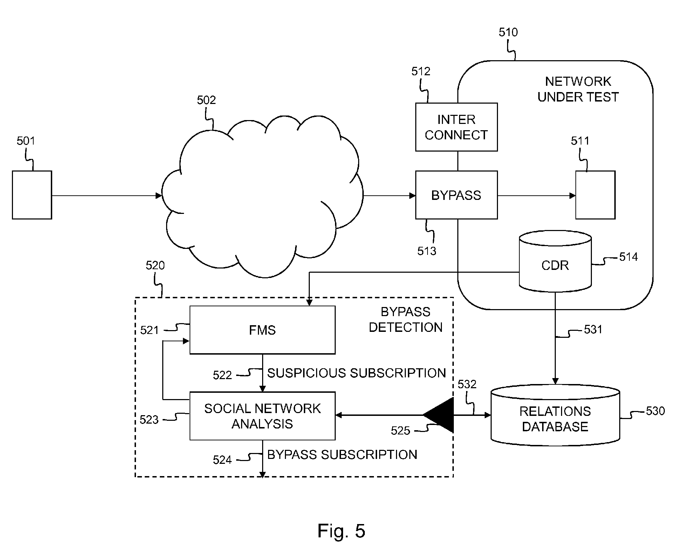

Fig. 5 shows a third embodiment of a system 520 for detection of a bypass 513 of an interconnect 512 to a telecommunication network under test 510 that operates according to the present invention. A similar situation as described here above with reference to Fig. 4 is considered. An off-net call originating from an end-user facility 501 in a network different from the network under test 510, e.g. a smartphone equipped with a SIM card of a user of network 510 that is travelling abroad and making a call to a destination 511 in its home network 510 using the visitor network of a roaming operator, is supposed to pass through the interconnect facility 512 between the network of the roaming operator and network 510 or between any intermediate operator's network 502 and network 510. The bypass 513 however may intercept the call from end-user facility 501 to terminal 511, setup an on-net call from the bypass 513 to the terminal 511 in the network 510 and inject the bi-directional voice information exchanged between end-user facility 501 and terminal 511 in this on-net call.

In the bypass detection system 520, FMS or Fraud Management System 521 analyzes the behaviour and call profiles of subscriptions in the network under test 510. FMS 521 thereto uses information extracted from CDR database 514 of the network under test 510. FMS 521 identifies subscriptions with behaviour indicative for bypass activity, e.g. a subscription with only outgoing calls and no incoming calls, with only voice traffic (i.e. no text messaging or data usage), having a high call diversity (i.e. a high ratio of different destinations called versus total number of destinations called) may be identified as a subscription likely in use by a bypass operator. The FMS 521 reports such suspicious subscription 522 to a second subsystem 523 of the system 520, the second subsystem being a social network analysis subsystem 523.

The system 520 hence comprises a social network analysis module 523, i.e. the second subsystem, that connects to the FMS 521 and via interface 525 to a relations database 530 that maintains relationship information between entities. These entities are subscribers, i.e. individuals or organizations, of one or more network operator. In Fig. 5, the relations database 530 at least receives CDR information 531 from the CDR database 514 in the network under test 510. This CDR information 531 is used by the relations database 530 to establish and update relationship information between entities, i.e. individuals or organizations that have a subscription in network 510. The social network analysis module 523 contacts the relations database 530 to obtain such relationship information 532 for entities or parties that were called previously by the reported suspicious subscription 522. The suspicious subscription 522 thus may be identified in a query for information sent from the social network analysis module 523 to the relations database 530 via the interface 525. In return, the relations database 530 delivers relationship information 532 on the relations of the suspicious subscription 522. The received relationship information 532 is analyzed by the social network analysis subsystem 523 in order to determine if one or more social networks exist where relations of the suspicious subscription 522 form part of, or if abnormal social networks exist where the suspicious entity 522 forms part of. The social network analysis subsystem 523 thereto applies one or more algorithms similar to the algorithms described here above in relation to social network analysis module 123 of Fig. 1. If such social network(s) is/are existing between relations of the suspicious entity 522 and if no abnormal social network exists where the suspicious entity 522 forms part of, this is an indication that the suspicious subscription 522 is in use by a legitimate client/subscriber of network 510 whose contacts themselves are also calling each other. In such case, the suspicious subscription 522 is identified as a false positive result by the social network analysis subsystem 523 and the system 520 shall not identify the suspicious subscription 522 as a bypass subscription. Consequently, the suspicious subscription 522 shall not be deactivated by the network operator of network 510. On the contrary, if no social network exists between relations of the suspicious subscription 522 and/or abnormal social network(s) exist where the suspicious entity 522 forms part of, the social network analysis subsystem 523 will identify the suspicious entity 522 as a bypass subscription 524. The network operator of network 510 will be informed thereof and may take measures like deactivation of the bypass subscription 524. As is further indicated in Fig. 5, the social network analysis module 523 may also exploit the information from the relations database 530 to identify subscriptions that have an international social network and feed that information back to the FMS 521. This way, the FMS 521 can concentrate efforts for analyzing the behaviour and call profiling on those subscriptions that have an international social network. Subscriptions that have no international social network need not be analyzed since there is no risk they are used by a bypass operator. This way, the social network analysis module 523 can help reduce the useless efforts spent by the FMS 521, and further increase the efficiency thereof.

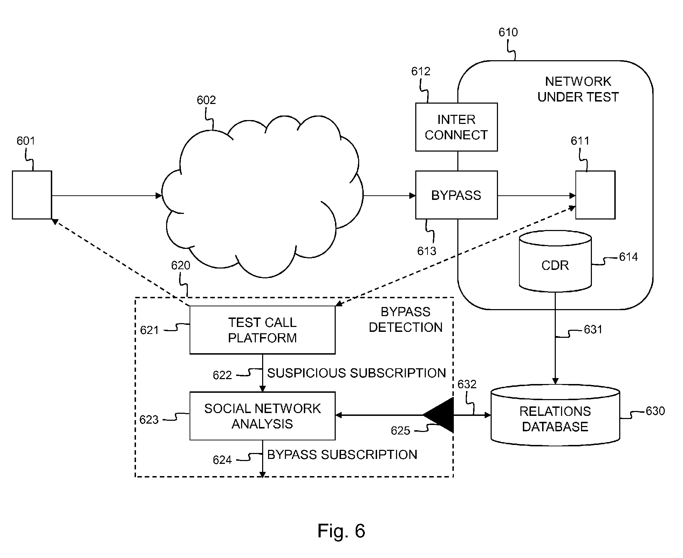

Fig. 6 shows a fourth embodiment of a system 620 for detection of a bypass 613 of an interconnect 612 to a telecommunication network under test 610 that operates according to the present invention. A similar situation as described here above with reference to Fig. 4 and Fig. 5 is considered. An off-net call originating from an end-user facility 601 in a network different from the network under test 610, e.g. a smartphone equipped with a SIM card of a user of network 610 that is travelling abroad and making a call to a destination 611 in its home network 610 using the visitor network of a roaming operator, is supposed to pass through the interconnect facility 612 between the network of the roaming operator and network 610 or between any intermediate operator's network 602 and network 610. The bypass 613 however may intercept the call from end-user facility 601 to terminal 611, setup an on-net call from the bypass 613 to the terminal 611 in the network 610 and inject the bi-directional voice information exchanged between end-user facility 601 and terminal 611 in this on-net call.

In the bypass detection system 620, test call platform 621 schedules and controls the execution of test calls between so called probes or robots, i.e. subscriptions in multiple communication networks. In Fig. 6, it is for instance assumed that end-user facility 601 and terminal 611 represent such probes. A test call is scheduled from end-user facility 601 to terminal 611, and terminal 611 reports to test call platform 621 the received CLI or Calling Line Identification. When this CLI does not correspond to the CLI of end-user facility 601, but corresponds to a subscription of the network under test 610, test call platform 621 shall identify that subscription as a suspicious subscription 622 that is likely in use by a bypass 613. The test call platform 621 reports such suspicious subscription 622 to a second subsystem 623 of the system 620. The second subsystem is a social network analysis subsystem 623.

The system 620 hence comprises a social network analysis module 623, i.e. the second subsystem, that connects to the test call platform 621 and via interface 625 to a relations database 630 that maintains relationship information between entities. These entities are subscribers, i.e. individuals or organizations of one or more network operator. In Fig. 6, the relations database 630 at least receives CDR information 631 from the CDR database 614 in the network under test 610. This CDR information 631 is used by the relations database 630 to establish and update relationship information between entities, i.e. individuals or organizations that have a subscription in network 610. The social network analysis module 623 contacts the relations database 630 to obtain such relationship information 632 for entities or parties that were called in the past by the reported suspicious subscription 622. The suspicious subscription 622 thus may be identified in a query for information sent from the social network analysis module 623 to the relations database 630. In return, the relations database 630 delivers relationship information 632 on the relations of the suspicious subscription 622. The received relationship information 632 is analyzed by the social network analysis subsystem 623 in order to determine if one or more social networks exist where relations of the suspicious subscription 622 form part of and/or to determine if abnormal social network(s) exist where the suspicious entity 623 forms part of. The social network analysis subsystem 623 thereto applies one or more algorithms similar to the ones described here above in relation to social network analysis subsystem 123 of Fig. 1. If such social network(s) is/are existing between relations of the suspicious subscription 622 and if no abnormal social network exists where the suspicious subscription 622 forms part of, this is an indication that the suspicious subscription 622 is in use by a legitimate client/subscriber of network 610 whose contacts themselves are also calling each other. In such case, the suspicious subscription 622 is identified as a false positive result by the social network analysis module 623 and the system 620 shall not identify the suspicious subscription 622 as a bypass subscription. Consequently, the suspicious subscription 622 shall not be deactivated by the network operator of network 610. On the contrary, if no social network exists between relations of the suspicious subscription 622 and/or abnormal social network(s) exist where the suspicious entity 622 forms part of, the social network analysis module 623 will identify the suspicious subscription 622 as a bypass subscription 624. The network operator of network 610 will be informed thereof and may take measures like deactivation of the bypass subscription 624.

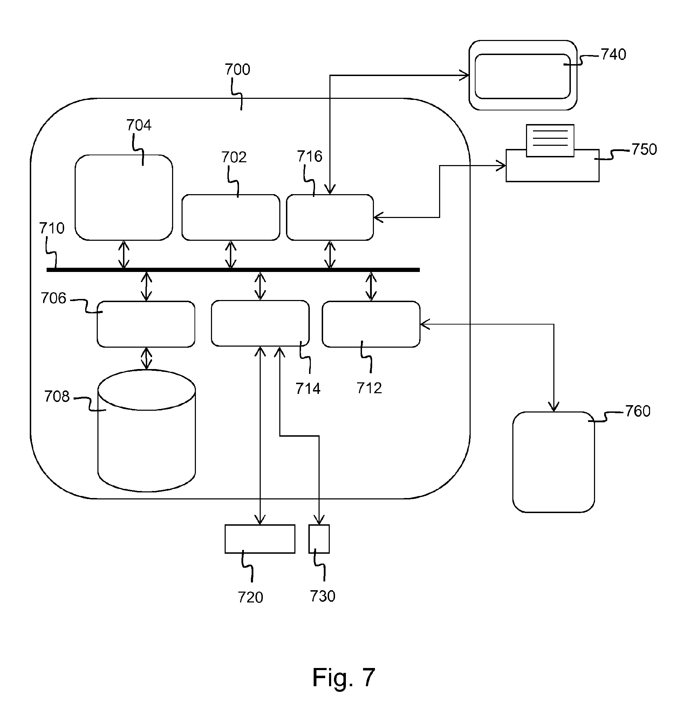

Fig. 7 shows a suitable computing system 700 for hosting the system for bypass detection according to the invention, embodiments of which are drawn in Fig. 1, Fig. 4, Fig. 5 or Fig. 6. Computing system 700 may in general be formed as a suitable general purpose computer and comprise a bus 710, a processor 702, a local memory 704, one or more optional input interfaces 714, one or more optional output interfaces 716, a communication interface 712, a storage element interface 706 and one or more storage elements 708. Bus 710 may comprise one or more conductors that permit communication among the components of the computing system. Processor 702 may include any type of conventional processor or microprocessor that interprets and executes programming instructions. Local memory 704 may include a random access memory (RAM) or another type of dynamic storage device that stores information and instructions for execution by processor 702 and/or a read only memory (ROM) or another type of static storage device that stores static information and instructions for use by processor 704. Input interface 714 may comprise one or more conventional mechanisms that permit an operator to input information to the computing device 700, such as a keyboard 720, a mouse 730, a pen, voice recognition and/or biometric mechanisms, etc. Output interface 716 may comprise one or more conventional mechanisms that output information to the operator, such as a display 740, a printer 750, a speaker, etc. Communication interface 712 may comprise any transceiver-like mechanism such as for example two 1 Gb Ethernet interfaces that enables computing system 700 to communicate with other devices and/or systems, for example mechanisms for communicating with one or more other computing systems. The communication interface 712 of computing system 700 may be connected to such another computing system 760 by means of a local area network (LAN) or a wide area network (WAN, such as for example the internet, in which case the other computing system may for example comprise a suitable web server. Storage element interface 706 may comprise a storage interface such as for example a Serial Advanced Technology Attachment (SATA) interface or a Small Computer System Interface (SCSI) for connecting bus 710 to one or more storage elements 708, such as one or more local disks, for example 1TB SATA disk drives, and control the reading and writing of data to and/or from these storage elements 708. Although the storage elements 708 above is described as a local disk, in general any other suitable computer-readable media such as a removable magnetic disk, optical storage media such as a CD or DVD, -ROM disk, solid state drives, flash memory cards, ... could be used.

The steps executed in the method for bypass detection according to the present invention, illustrated by the above embodiments, may be implemented as programming instructions stored in local memory 704 of the computing system 700 for execution by its processor 702. Alternatively the instructions may be stored on the storage element 708 or be accessible from another computing system through the communication interface 712.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A system (120; 420; 520; 620) for detection of a bypass (113; 413; 513; 613) of an interconnect (112; 412; 512; 612) to a telecommunication network (110; 410; 510; 610), said system (120; 420; 520; 620) comprising:
- an interface (125; 425; 525; 625) to a relations database (130; 430; 530; 630) wherein relationship information (132; 432; 532; 632) between entities (E1, E2, E3, E4, E5, E6) is maintained; and
- a social network analysis subsystem (123; 423; 523; 623), operationally coupled to said interface (125; 425; 525; 625) and configured to consult said relations database (130; 430; 530; 630), to analyze relationship information (132; 432; 532; 632) between entities (E1, E2, E3, E4, E5, E6) to detect one or more social network, a social network being a plurality of interrelated entities, and to identify an entity (E1) as being used to bypass said interconnect (112; 412; 512; 612) to said telecommunication network (110; 410; 510; 610) in case of:
- absence of a social network where said entity (E1) belongs to; and/or
- presence of one or more abnormal social network where said entity (E1) belongs to;
- absence of a social network between entities (E2, E3, E4, E6) related to said entity (E1); and/or
- presence of one or more abnormal social network between entities (E2, E3, E4, E6) related to said entity (E1).

2. A system (120; 420; 520; 620) for detection of a bypass (113; 413; 513; 613) of an interconnect (112; 412; 512; 612) to a telecommunication network (110; 410; 510; 610) according to claim 1, wherein said social network analysis subsystem (123; 423; 523; 623) comprises:
- an algorithm repository adapted to store one or more algorithm specifying how to detect a social network between entities (E1, E2, E3, E4, E5, E6) from relationship information (132; 432; 532; 632) in said relations database (130; 430; 530; 630) indicative for interaction between said entities (E1, E2, E3, E4, E5, E6); and
- an algorithm engine, coupled to said algorithm repository and configured to execute said one or more algorithm to thereby detect said one or more social network.

3. A system (120; 420; 520; 620) for detection of a bypass (113; 413; 513; 613) of an interconnect (112; 412; 512; 612) to a telecommunication network (110; 410; 510; 610) according to claim 2, wherein said algorithm repository stores an algorithm that specifies:
- determining an amount of relations between entities (E2, E3, E4, E6) that are first level relations of said entity (E1); and
- detecting presence of a social network when said amount of relations exceeds a certain threshold.

4. A system (120; 420; 520; 620) for detection of a bypass (113; 413; 513; 613) of an interconnect (112; 412; 512; 612) to a telecommunication network (110; 410; 510; 610) according to claim 2, wherein said algorithm repository stores an algorithm that specifies:
- determining an amount of relations having a minimum duration between entities (E2, E3, E4, E6) that are first level relations of said entity (E1); and
- detecting presence of a social network when said amount of relations having a minimum duration exceeds a certain threshold.

5. A system (120; 420; 520; 620) for detection of a bypass (113; 413; 513; 613) of an interconnect (112; 412; 512; 612) to a telecommunication network (110; 410; 510; 610) according to claim 2, wherein said algorithm repository stores an algorithm that specifies:
- determining a ratio of an amount of existing relations between entities (E2, E3, E4, E6) that are first level relations of said entity (E1) versus a theoretic amount of possible relations between said first level relations (E2, E3, E4, E6) or versus a typical amount of relations between legitimate entities; and
- detecting presence of a social network when said ratio exceeds a certain threshold.

6. A system (120; 420; 520; 620) for detection of a bypass (113; 413; 513; 613) of an interconnect (112; 412; 512; 612) to a telecommunication network (110; 410; 510; 610) according to claim 2, wherein said algorithm repository stores an algorithm that specifies:
- determining call diversity for said entity (E1) from the amount of different first level relations (E2, E3, E4, E6) of said entity (E1); and
- detecting absence of a social network where said entity (E1) belongs to when said call diversity exceeds a certain threshold.

7. A system (120; 420; 520; 620) for detection of a bypass (113; 413; 513; 613) of an interconnect (112; 412; 512; 612) to a telecommunication network (110; 410; 510; 610) according to claim 2, wherein said algorithm repository stores an algorithm that specifies:
- determining a ratio of an amount of first level relations of said entity (E1) that have international relations versus a total amount of first level relations (E2, E3, E4, E6) of said entity (E1); and
- detecting presence of an abnormal social network when said ratio of first level relations with international relations exceeds a certain threshold.

8. A system (120; 420; 520; 620) for detection of a bypass (113; 413; 513; 613) of an interconnect (112; 412; 512; 612) to a telecommunication network (110; 410; 510; 610) according to claim 2, wherein said algorithm repository stores an algorithm that specifies:
- determining a ratio of an amount of unidirectional first level relations of said entity versus a total amount of first level relations (E2, E3, E4, E6) of said entity (E1); and
- detecting presence of an abnormal social network when said ratio of unidirectional first level relations exceeds a certain threshold.

9. A system (120; 420; 520; 620) for detection of a bypass (113; 413; 513; 613) of an interconnect (112; 412; 512; 612) to a telecommunication network (110; 410; 510; 610) according to claim 2, wherein said algorithm repository stores an algorithm that specifies:
- determining a ratio of an amount of called first relations of said entity (E1) versus a total amount of first level relations (E2, E3, E4, E6) of said entity (E1), a called first relation being a relation of said entity (E1) that called said entity (E1) before being called back by said entity (E1); and
- detecting presence of an abnormal social network when said ratio of called first relations is below a certain threshold.

10. A system (120; 420; 520; 620) for detection of a bypass (113; 413; 513; 613) of an interconnect (112; 412; 512; 612) to a telecommunication network (110; 410; 510; 610) according to claim 2, wherein said algorithm repository stores an algorithm wherein bidirectional relations are weighted higher than unidirectional relations in detecting presence of a social network where said entity (E1) forms part of.

11. A system (120; 420; 520; 620) for detection of a bypass (113; 413; 513; 613) of an interconnect (112; 412; 512; 612) to a telecommunication network (110; 410; 510; 610) according to claim 2, wherein said algorithm repository stores an algorithm wherein older relations are weighted higher than more recent relations in detecting presence of a social network where said entity (E1) forms part of.

12. A system (120; 420; 520; 620) for detection of a bypass (113; 413; 513; 613) of an interconnect (112; 412; 512; 612) to a telecommunication network (110; 410; 510; 610) according to claim 2, wherein said algorithm repository stores an algorithm wherein distant relations of said entity (E1), i.e. non-direct relations, are considered in detecting presence of a social network.

13. A system (120; 420; 520; 620) for detection of a bypass (113; 413; 513; 613) of an interconnect (112; 412; 512; 612) to a telecommunication network (110; 410; 510; 610) according to claim 2, wherein said algorithm repository stores an algorithm wherein evolution of relations over time is considered in detecting presence of a social network.

14. A system (120; 420; 520; 620) for detection of a bypass (113; 413; 513; 613) of an interconnect (112; 412; 512; 612) to a telecommunication network (110; 410; 510; 610) according to one of the preceding claims, wherein said relationship information (132; 432; 532; 632) comprises one or more of:
- a relationship map;
- a history of voice calls;
- a history of data communication;
- a history of bank transactions;
- connectivity and distance information from social network tools;
- information on relatives;
- kinship information;
- ownership information;
- membership information.

15. A system (420; 520; 620) for detection of a bypass (413; 513; 613) of an interconnect (412; 512; 612) to a telecommunication network (410; 510; 610) according to one of the preceding claims, said system (420; 520; 620) comprising:
- a first subsystem (421; 521; 621) configured to identify based on at least a first criterion a suspicious entity (422; 522; 622) that is likely used to bypass said interconnect (412; 512; 612) to said telecommunication network (410; 510; 610);
- said social network analysis subsystem (423; 523; 623) being operationally coupled to said first subsystem (421; 521; 621), and being configured to consult said relations database (430; 530; 630) and analyze relationship information (432; 532; 632) for entities related to said suspicious entity (422; 522; 622) in order to confirm said suspicious entity (422; 522; 622) is used to bypass said interconnect (412; 512; 612) to said telecommunication network (410; 510; 610).

16. A system (520) for detection of a bypass (513) of an interconnect (512) to a telecommunication network (510) according to claim 15,
wherein said first subsystem (521) comprises a fraud management system or FMS configured to analyze call detail records or CDRs of said telecommunication network (510), and
wherein said first criterion comprises a match between a call profile of said suspicious entity (522) and a model call profile of an entity used to bypass an interconnect.

17. A system (520) for detection of a bypass (513) of an interconnect (512) to a telecommunication network (510) according to claim 16,
wherein said relations database is configured to access said CDRs to establish said relationship information.

18. A system (620) for detection of a bypass (613) of an interconnect (612) to a telecommunication network (610) according to claim 15,
wherein said first subsystem (621) comprises a test call platform configured to schedule and execute test calls from probes (601) in a different telecommunication network to a probe (611) in said telecommunication network (610), and
wherein said first criterion comprises a comparison between expected and received calling line identifications for one of said test calls and a received calling line identification in case of mismatch enables to identify said suspicious entity.

19. A method for detection of a bypass (113; 413; 513; 613) of an interconnect (112; 412; 512; 612) to a telecommunication network (110; 410; 510; 610), said method comprising:
- consulting relationship information between entities (E1, E2, E3, E4, E5, E6) maintained in a relations database (130; 430; 530; 630);
- analyzing relationship information between entities (E1, E2, E3, E4, E5, E6) to detect one or more social network, a social network being a plurality of interrelated entities; and
- identifying an entity (E1) as being used to bypass said interconnect (112; 412; 512; 612) to said telecommunication network (110; 410; 510; 610) in case of:
- absence of a social network where said entity (E1) belongs to; and/or
- presence of one or more abnormal social network where said entity (E1) belongs to;
- absence of a social network between entities (E2, E3, E4, E6) related to said entity (E1); and/or
- presence of one or more abnormal social network between entities (E2, E3, E4, E6) related to said entity (E1).
